# EUROPEAN PATENT SPECIFICATION

(11) **EP 4 266 932 B1**
(45) Date of publication and mention of the grant of the patent: **18.02.2026**
(21) Application number: 21911367.7
(22) Date of filing: 14.12.2021
(51) Int. Cl.: A24F 40/51, A24F 40/40, A24F 40/57, G01D 5/26, G01N 27/60, A24F 40/20, G01N 21/3554, G01N 27/22

(54) **AEROSOL-GENERATING DEVICE AND OPERATION METHOD THEREOF**
AEROSOLERZEUGUNGSVORRICHTUNG UND BETRIEBSVERFAHREN DAFÜR
DISPOSITIF DE GÉNÉRATION D'AÉROSOL ET SON PROCÉDÉ DE FONCTIONNEMENT

(30) Priority: 23.12.2020 KR 20200182391
(43) Date of publication of application: 01.11.2023
(73) Proprietor: KT&G Corporation, Daedeok-gu Daejeon 34337 (KR)
(72) Inventor: HAN, Daenam, Seoul 06344 (KR); JANG, Seoksu, Seoul 34337 (KR); LEE, Seungwon, Gwangmyung-si Gyeonggi-do 14293 (KR); YOON, Sungwook, Suwon-si Gyeonggi-do 16534 (KR); KIM, Yonghwan, Anyang-si Gyeonggi-do 13970 (KR)
(74) Representative: AWA Sweden AB
(86) International application number: PCT/KR2021/018940
(87) International publication number: WO 2022/139300

(56) References cited:
- WO-A1-2020/165450
- KR-A- 20180 085 365
- KR-A- 20180 085 365
- KR-A- 20200 009 378
- US-A1- 2018 070 632
- US-A1- 2018 140 008
- US-B2- 10 827 782

## Description

### [Technical Field]

The present disclosure relates to an aerosol-generating device and an operation method thereof.

### [Background Art]

An aerosol-generating device is a device that extracts certain components from a medium or a substance by forming an aerosol. The medium may contain a multicomponent substance. The substance contained in the medium may be a multicomponent flavoring substance. For example, the substance contained in the medium may include a nicotine component, an herbal component, and/or a coffee component. Recently, various research on aerosol-generating devices has been conducted.

In general, water has a higher specific heat than air. Additionally, water has a greater heat capacity than air at the same temperature. Therefore, when a user inhales an aerosol having high moisture content, there may be a problem in that the user experiences a higher temperature than when inhaling air at the same temperature.

WO 2020165450 A1 discloses aerosol-generating systems comprising an aerosol-forming substrate arranged between electrodes such that the aerosol-forming substrate and electrodes form a capacitor. This document describes a device and a method comprising the features mentioned in the preamble of the present claims 1 and 8.

### [Disclosure]

### [Technical Problem]

It is an object of the present disclosure to solve the above and other problems.

It is another object of the present disclosure to provide an aerosol-generating device and an operation method thereof capable of detecting the amount of moisture contained in an aerosol-generating article.

It is still another object of the present disclosure to provide an aerosol-generating device and an operation method thereof capable of controlling the amount of electric power supplied to a heater in consideration of the amount of moisture contained in an aerosol-generating article.

The invention addresses the above objectives by the device as defined in the present claim 1 and by the method as defined in the present claim 8.

### [Technical Solution]

An aerosol-generating device according to various embodiments of the present disclosure for accomplishing the above and other objects may include a housing having an inner space formed therein to allow a cigarette to be inserted thereinto, a moisture detection sensor configured to sense moisture contained in the cigarette inserted into the inner space, a memory configured to store therein a plurality of temperature profiles, a heater configured to heat the cigarette, and a controller. The controller may determine the amount of moisture contained in the cigarette based on a signal received from the moisture detection sensor, and may determine a temperature profile corresponding to the determined amount of moisture, among the plurality of temperature profiles.

An operation method of an aerosol-generating device according to various embodiments of the present disclosure for accomplishing the above and other objects may include determining the amount of moisture contained in a cigarette inserted into an inner space formed in a housing of the aerosol-generating device using a moisture detection sensor configured to sense moisture contained in the cigarette and determining a temperature profile corresponding to the determined amount of moisture, among a plurality of temperature profiles stored in a memory.

### Advantageous Effects of Invention

According to at least one of embodiments of the present disclosure, it is possible to detect the amount of moisture contained in an aerosol-generating article using various sensors.

According to at least one of embodiments of the present disclosure, it is possible to appropriately control the amount of electric power supplied to a heater in consideration of the amount of moisture contained in an aerosol-generating article, thereby preventing the occurrence of a problem in that a user experiences a high temperature when inhaling an aerosol.

Additional applications of the present disclosure will become apparent from the following detailed description. However, because various changes and modifications will be clearly understood by those skilled in the art within the spirit and scope of the present disclosure, it should be understood that the detailed description and specific embodiments, such as preferred embodiments of the present disclosure, are merely given by way of example.

### Brief Description of Drawings

The above and other objects, features and other advantages of the present disclosure will be more clearly understood from the following detailed description taken in conjunction with the accompanying drawings, in which:
FIG. 1 is a block diagram of an aerosol-generating device according to an embodiment of the present disclosure;
FIGS. 2A to 3 are views for explaining an aerosol-generating device according to embodiments of the present disclosure;
FIG. 4 is a flowchart showing an operation method of the aerosol-generating device according to an embodiment of the present disclosure; and
FIGS. 5A to 8 are views for explaining the operation of the aerosol-generating device.

### [Best Mode]

Hereinafter, the embodiments disclosed in the present specification will be described in detail with reference to the accompanying drawings. The same or similar elements are denoted by the same reference numerals even though they are depicted in different drawings, and redundant descriptions thereof will be omitted.

In the following description, with respect to constituent elements used in the following description, the suffixes "module" and "unit" are used only in consideration of facilitation of description. The "module" and "unit" are do not have mutually distinguished meanings or functions.

In addition, in the following description of the embodiments disclosed in the present specification, a detailed description of known functions and configurations incorporated herein will be omitted when the same may make the subject matter of the embodiments disclosed in the present specification rather unclear. In addition, the accompanying drawings are provided only for a better understanding of the embodiments disclosed in the present specification and are not intended to limit the technical ideas disclosed in the present specification.

It will be understood that the terms "first", "second", etc., may be used herein to describe various components. However, these components should not be limited by these terms. These terms are only used to distinguish one component from another component.

It will be understood that when a component is referred to as being "connected to" or "coupled to" another component, it may be directly connected to or coupled to another component. However, it will be understood that intervening components may be present. On the other hand, when a component is referred to as being "directly connected to" or "directly coupled to" another component, there are no intervening components present.

As used herein, the singular form is intended to include the plural forms as well, unless the context clearly indicates otherwise.

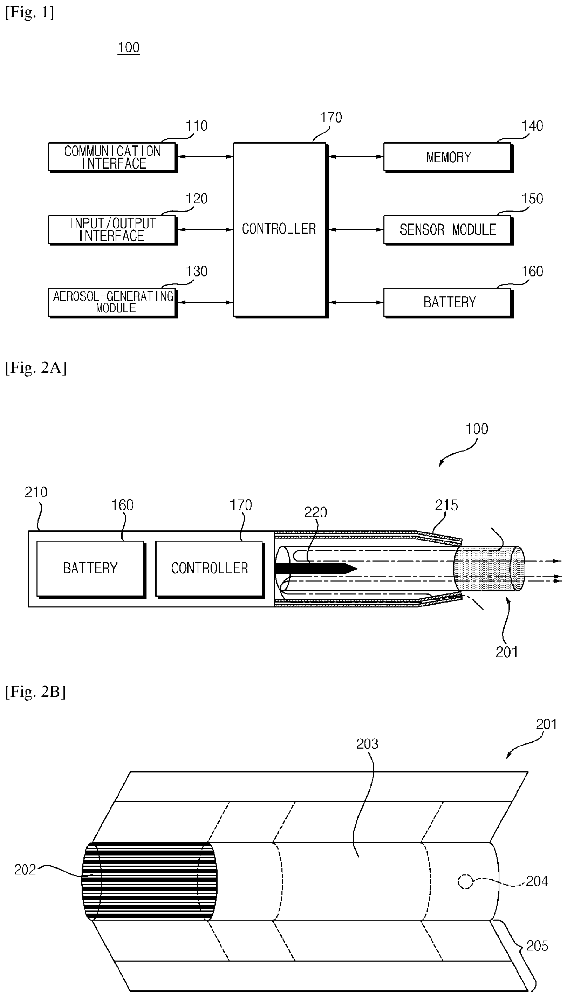

FIG. 1 is a block diagram of an aerosol-generating device according to an embodiment of the present disclosure.

Referring to FIG. 1, an aerosol-generating device 100 may include a communication interface 110, an input/output interface 120, an aerosol-generating module 130, a memory 140, a sensor module 150, a battery 160, and/or a controller 170.

In one embodiment, the aerosol-generating device 100 may be composed only of a main body. In this case, components included in the aerosol-generating device 100 may be located in the main body. In another embodiment, the aerosol-generating device 100 may be composed of a cartridge, which contains an aerosol-generating substance, and a main body. In this case, the components included in the aerosol-generating device 100 may be located in at least one of the main body or the cartridge.

The communication interface 110 may include at least one communication module for communication with an external device and/or a network. For example, the communication interface 110 may include a communication module for wired communication, such as a Universal Serial Bus (USB). For example, the communication interface 110 may include a communication module for wireless communication, such as Wireless Fidelity (Wi-Fi), Bluetooth, Bluetooth Low Energy (BLE), ZigBee, or nearfield communication (NFC).

The input/output interface 120 may include an input device (not shown) for receiving a command from a user and/or an output device (not shown) for outputting information to the user. For example, the input device may include a touch panel, a physical button, a microphone, or the like. For example, the output device may include a display device for outputting visual information, such as a display or a light-emitting diode (LED), an audio device for outputting auditory information, such as a speaker or a buzzer, a motor for outputting tactile information such as haptic effect, or the like.

The input/output interface 120 may transmit data corresponding to a command input by the user through the input device to another component (or other components) of the aerosol-generating device 100. The input/output interface 120 may output information corresponding to data received from another component (or other components) of the aerosol-generating device 100 through the output device.

The aerosol-generating module 130 may generate an aerosol from an aerosol-generating substance. Here, the aerosol-generating substance may be a substance in a liquid state, a solid state, or a gel state, which is capable of generating an aerosol, or a combination of two or more aerosol-generating substances.

According to an embodiment, the liquid aerosol-generating substance may be a liquid including a tobacco-containing material having a volatile tobacco flavor component. According to another embodiment, the liquid aerosol-generating substance may be a liquid including a non-tobacco material. For example, the liquid aerosol-generating substance may include water, solvents, nicotine, plant extracts, flavorings, flavoring agents, vitamin mixtures, etc.

The solid aerosol-generating substance may include a solid material based on a tobacco raw material such as a reconstituted tobacco sheet, shredded tobacco, or granulated tobacco. In addition, the solid aerosol-generating substance may include a solid material having a taste control agent and a flavoring material. For example, the taste control agent may include calcium carbonate, sodium bicarbonate, calcium oxide, etc. For example, the flavoring material may include a natural material such as herbal granules, or may include a material such as silica, zeolite, or dextrin, which includes an aroma ingredient.

In addition, the aerosol-generating substance may further include an aerosol-forming agent such as glycerin or propylene glycol.

The aerosol-generating module 130 may include at least one heater (not shown).

The aerosol-generating module 130 may include an electro-resistive heater. For example, the electro-resistive heater may include at least one electrically conductive track. The electro-resistive heater may be heated as current flows through the electrically conductive track. At this time, the aerosol-generating substance may be heated by the heated electro-resistive heater.

The electrically conductive track may include an electro-resistive material. In one example, the electrically conductive track may be formed of a metal material. In another example, the electrically conductive track may be formed of a ceramic material, carbon, a metal alloy, or a composite of a ceramic material and metal.

The electro-resistive heater may include an electrically conductive track that is formed in any of various shapes. For example, the electrically conductive track may be formed in any one of a tubular shape, a plate shape, a needle shape, a rod shape, and a coil shape.

The aerosol-generating module 130 may include a heater that uses an induction-heating method. For example, the induction heater may include an electrically conductive coil. The induction heater may generate an alternating magnetic field, which periodically changes in direction, by adjusting the current flowing through the electrically conductive coil. At this time, when the alternating magnetic field is applied to a magnetic body, energy loss may occur in the magnetic body due to eddy current loss and hysteresis loss. In addition, the lost energy may be released as thermal energy. Accordingly, the aerosol-generating substance located adjacent to the magnetic body may be heated. Here, an object that generates heat due to the magnetic field may be referred to as a susceptor.

Meanwhile, the aerosol-generating module 130 may generate ultrasonic vibrations to thereby generate an aerosol from the aerosol-generating substance.

The aerosol-generating device 100 may be referred to as a cartomizer, an atomizer, or a vaporizer.

The memory 140 may store programs for processing and controlling each signal in the controller 170, and may store processed data and data to be processed.

For example, the memory 140 may store applications designed for the purpose of performing various tasks that can be processed by the controller 170. The memory 140 may selectively provide some of the stored applications in response to the request from the controller 170.

For example, the memory 140 may store data on the operation time of the aerosol-generating device 100, the maximum number of puffs, the current number of puffs, the number of uses of battery 160, at least one temperature profile, at least one electric power profile, the user's inhalation pattern, and data about charging/discharging. Here, "puff" means inhalation by the user. "inhalation" means the user's act of taking air or other substances into the user's oral cavity, nasal cavity, or lungs through the user's mouth or nose.

The memory 140 may include at least one of volatile memory (e.g. dynamic random access memory (DRAM), static random access memory (SRAM), or synchronous dynamic random access memory (SDRAM)), nonvolatile memory (e.g. flash memory), a hard disk drive (HDD), or a solid-state drive (SSD).

The sensor module 150 may include at least one sensor.

For example, the sensor module 150 may include a sensor for sensing a puff (hereinafter referred to as a "puff sensor"). In this case, the puff sensor may be implemented as a proximity sensor such as an IR sensor, a pressure sensor, a gyro sensor, an acceleration sensor, a magnetic field sensor, or the like.

For example, the sensor module 150 may include a sensor for sensing a puff (hereinafter referred to as a "puff sensor"). In this case, the puff sensor may be implemented by a pressure sensor, a gyro sensor, an acceleration sensor, a magnetic field sensor, or the like.

For example, the sensor module 150 may include a sensor for sensing the temperature of the heater included in the aerosol-generating module 130 and the temperature of the aerosol-generating substance (hereinafter referred to as a "temperature sensor"). In this case, the heater included in the aerosol-generating module 130 may also serve as the temperature sensor. For example, the electro-resistive material of the heater may be a material having a predetermined temperature coefficient of resistance. The sensor module 150 may measure the resistance of the heater, which varies according to the temperature, to thereby sense the temperature of the heater.

For example, in the case in which the main body of the aerosol-generating device 100 is formed to allow a cigarette to be inserted thereinto, the sensor module 150 may include a sensor for sensing insertion of the cigarette (hereinafter referred to as a "cigarette detection sensor").

For example, in the case in which the aerosol-generating device 100 includes a cartridge, the sensor module 150 may include a sensor for sensing mounting/demounting of the cartridge and the position of the cartridge (hereinafter referred to as a "cartridge detection sensor").

In this case, the cigarette detection sensor and/or the cartridge detection sensor may be implemented as an inductance-based sensor, a capacitive sensor, a resistance sensor, or a Hall sensor (or Hall IC) using a Hall effect.

For example, the sensor module 150 may include a voltage sensor for sensing a voltage applied to a component (e.g. the battery 160) provided in the aerosol-generating device 100 and/or a current sensor for sensing a current.

For example, the sensor module 150 may include a sensor configured to sense the moisture contained in an aerosol-generating article (hereinafter referred to as a "moisture detection sensor"). In this case, the moisture detection sensor may be implemented as a non-contact sensor, such as an infrared ray (IR) sensor, and/or a contact sensor, such as a capacitive sensor. Hereinafter, a cigarette will be described as an example of an aerosol-generating article, but the present disclosure is not limited thereto.

The battery 160 may supply electric power used for the operation of the aerosol-generating device 100 under the control of the controller 170. The battery 160 may supply electric power to other components provided in the aerosol-generating device 100. For example, the battery 160 may supply electric power to the communication module included in the communication interface 110, the output device included in the input/output interface 120, and the heater included in the aerosol-generating module 130.

The battery 160 may be a rechargeable battery or a disposable battery. For example, the battery 160 may be a lithium-ion (Li-ion) battery or a lithium polymer (Li-polymer) battery. However, the present disclosure is not limited thereto. For example, when the battery 160 is rechargeable, the charging rate (C-rate) of the battery 160 may be 10C, and the discharging rate (C-rate) thereof may be 10C to 20C. However, the present disclosure is not limited thereto. Also, for stable use, the battery 160 may be manufactured such that 80% or more of the total capacity may be ensured even when charging/discharging is performed 2000 times.

The aerosol-generating device 100 may further include a battery protection circuit module (PCM) (not shown), which is a circuit for protecting the battery 160. The battery protection circuit module (PCM) may be disposed adjacent to the upper surface of the battery 160. For example, in order to prevent overcharging and overdischarging of the battery 160, the battery protection circuit module (PCM) may cut off the electrical path to the battery 160 when a short circuit occurs in a circuit connected to the battery 160, when an overvoltage is applied to the battery 160, or when an overcurrent flows through the battery 160.

The aerosol-generating device 100 may further include a charging terminal to which electric power supplied from the outside is input. For example, the charging terminal may be formed at one side of the main body of the aerosol-generating device 100. The aerosol-generating device 100 may charge the battery 160 using electric power supplied through the charging terminal. In this case, the charging terminal may be configured as a wired terminal for USB communication, a pogo pin, or the like.

The aerosol-generating device 100 may further include a power terminal (not shown) to which electric power supplied from the outside is input. For example, a power line may be connected to the power terminal, which is disposed at one side of the main body of the aerosol-generating device 100. The aerosol-generating device 100 may use the electric power supplied through the power line connected to the power terminal to charge the battery 160. In this case, the power terminal may be a wired terminal for USB communication.

The aerosol-generating device 100 may wirelessly receive electric power supplied from the outside through the communication interface 110. For example, the aerosol-generating device 100 may wirelessly receive electric power using an antenna included in the communication module for wireless communication. The aerosol-generating device 100 may charge the battery 160 using the wirelessly supplied electric power.

The controller 170 may control the overall operation of the aerosol-generating device 100. The controller 170 may be connected to each of the components provided in the aerosol-generating device 100. The controller 170 may transmit and/or receive a signal to and/or from each of the components, thereby controlling the overall operation of each of the components.

The controller 170 may include at least one processor. The controller 170 may control the overall operation of the aerosol-generating device 100 using the processor included therein. Here, the processor may be a general processor such as a central processing unit (CPU). Of course, the processor may be a dedicated device such as an application-specific integrated circuit (ASIC), or may be any of other hardware-based processors.

The controller 170 may perform any one of a plurality of functions of the aerosol-generating device 100. For example, the controller 170 may perform any one of a plurality of functions of the aerosol-generating device 100 (e.g. a preheating function, a heating function, a charging function, and a cleaning function) according to the state of each of the components provided in the aerosol-generating device 100 and the user's command received through the input/output interface 120.

The controller 170 may control the operation of each of the components provided in the aerosol-generating device 100 based on data stored in the memory 140. For example, the controller 170 may control the supply of a predetermined amount of electric power from the battery 160 to the aerosol-generating module 130 for a predetermined time based on the data on the temperature profile, the electric power profile, and the user's inhalation pattern, which is stored in the memory 140.

The controller 170 may determine the occurrence or non-occurrence of a puff using the puff sensor included in the sensor module 150. For example, the controller 170 may check a temperature change, a flow change, a pressure change, and a voltage change in the aerosol-generating device 100 based on the values sensed by the puff sensor. The controller 170 may determine the occurrence or non-occurrence of a puff based on the value sensed by the puff sensor.

The controller 170 may control the operation of each of the components provided in the aerosol-generating device 100 according to the occurrence or non-occurrence of a puff and/or the number of puffs. For example, upon determining that a puff has occurred, the controller 170 may perform control such that electric power is supplied to the heater according to the electric power profile stored in the memory 140. For example, the controller 170 may perform control such that the temperature of the heater is changed or maintained based on the temperature profile stored in the memory 140.

The controller 170 may perform control such that the supply of electric power to the heater is interrupted according to a predetermined condition. For example, the controller 170 may perform control such that the supply of electric power to the heater is interrupted when the cigarette is removed, when the cartridge is demounted, when the number of puffs reaches the predetermined maximum number of puffs, when a puff is not sensed during a predetermined period of time or longer, or when the remaining capacity of the battery 160 is less than a predetermined value.

The controller 170 may calculate the remaining capacity with respect to the full charge capacity of the battery 160. For example, the controller 170 may calculate the remaining capacity of the battery 160 based on the values sensed by the voltage sensor and/or the current sensor included in the sensor module 150.

The controller 170 may calculate the amount of moisture contained in a cigarette using the moisture detection sensor included in the sensor module 150.

The controller 170 may control the amount of electric power supplied to the heater in consideration of the amount of moisture contained in the cigarette. For example, the controller 170 may determine a temperature profile corresponding to the amount of moisture contained in the cigarette. The controller 170 may control the amount of electric power supplied to the heater based on the determined temperature profile.

FIGS. 2A to 3 are views for explaining the aerosol-generating device according to embodiments of the present disclosure.

According to various embodiments of the present disclosure, the aerosol-generating device 100 may include a main body and/or a cartridge.

Referring to FIG. 2A, the aerosol-generating device 100 according to an embodiment may include a main body 210, which is formed such that a cigarette 201 can be inserted into the inner space formed by a housing 215.

The cigarette 201 may be similar to a general combustive cigarette. For example, the cigarette 201 may be divided into a first portion including an aerosol-generating substance and a second portion including a filter. Alternatively, the second portion of the cigarette 201 may also include an aerosol-generating substance. For example, a granular or capsular flavoring material may be inserted into the second portion.

The entirety of the first portion may be inserted into the aerosol-generating device 100. The second portion may be exposed to the outside. Alternatively, only a portion of the first portion may be inserted into the aerosol-generating device 100. Alternatively, the entirety of the first portion and a portion of the second portion may be inserted into the aerosol-generating device 100. The user may inhale the aerosol in the state of holding the second portion in the mouth. At this time, the aerosol may be generated as external air passes through the first portion. The generated aerosol may pass through the second portion to be introduced into the mouth of the user.

The main body 210 may be structured such that external air is introduced into the main body 210 in the state in which the cigarette 201 is inserted thereinto. In this case, the external air introduced into the main body 210 may flow into the mouth of the user via the cigarette 201.

When the cigarette 201 is inserted, the controller 170 may perform control such that electric power is supplied to the heater based on the temperature profile stored in the memory 140.

The controller 170 may perform control such that electric power is supplied to the heater using at least one of a pulse width modulation (PWM) method or a proportional-integral-differential (PID) method.

For example, the controller 170 may perform control such that a current pulse having a predetermined frequency and a predetermined duty ratio is supplied to the heater using the PWM method. In this case, the controller 170 may control the amount of electric power supplied to the heater by adjusting the frequency and the duty ratio of the current pulse.

For example, the controller 170 may determine a target temperature to be controlled based on the temperature profile. In this case, the controller 170 may control the amount of electric power supplied to the heater using the PID method, which is a feedback control method using a difference value between the temperature of the heater and the target temperature, a value obtained by integrating the difference value with respect to time, and a value obtained by differentiating the difference value with respect to time.

Although the PWM method and the PID method are described as examples of methods of controlling the supply of electric power to the heater, the present disclosure is not limited thereto, and may employ any of various control methods, such as a proportional-integral (PI) method or a proportional-differential (PD) method.

The heater may be disposed in the main body 210 at a position corresponding to the position at which the cigarette 201 is inserted into the main body 210. Although it is illustrated in the drawings that the heater is an electrically conductive heater 220 including a needle-shaped electrically conductive track, the present disclosure is not limited thereto.

The heater may heat the interior and/or exterior of the cigarette 201 using the electric power supplied from the battery 160. An aerosol may be generated from the heated cigarette 201. At this time, the user may hold one end of the cigarette 201 in the mouth to inhale the aerosol containing a tobacco material.

Meanwhile, the controller 170 may perform control such that electric power is supplied to the heater in the state in which the cigarette 201 is not inserted into the main body according to a predetermined condition. For example, when a cleaning function for cleaning the space into which the cigarette 201 is inserted is selected in response to a command input by the user through the input/output interface 120, the controller 170 may perform control such that a predetermined amount of electric power is supplied to the heater.

The controller 170 may monitor the number of puffs based on the value sensed by the puff sensor from the time point at which the cigarette 201 was inserted into the main body.

When the cigarette 201 is removed from the main body, the controller 170 may initialize the current number of puffs stored in the memory 140.

Referring to FIG. 2B, the cigarette 201 according to an embodiment may include a tobacco rod 202 and a filter rod 203. The first portion described above with reference to FIG. 2A may include the tobacco rod 202. The second portion described above with reference to FIG. 2A may include the filter rod 203.

Although it is illustrated in FIG. 2B that the filter rod 203 is composed of a single segment, the present disclosure is not limited thereto. In other words, the filter rod 203 may be composed of a plurality of segments. For example, the filter rod 203 may include a first segment configured to cool an aerosol and a second segment configured to remove a predetermined component included in the aerosol. In addition, the filter rod 203 may further include at least one segment configured to perform other functions, as needed.

The cigarette 201 may be packed using at least one wrapper 205. The wrapper 205 may have at least one hole formed therein to allow external air to be introduced thereinto or to allow internal gas to be discharged therefrom. In one example, the cigarette 201 may be packed using one wrapper 205. In another example, the cigarette 201 may be doubly packed using two or more wrappers 205. For example, the tobacco rod 202 may be packed using a first wrapper. For example, the filter rod 203 may be packed using a second wrapper. The tobacco rod 202 and the filter rod 203, which are individually packed using separate wrappers, may be coupled to each other. The entire cigarette 201 may be packed using a third wrapper. When each of the tobacco rod 202 and the filter rod 203 is composed of a plurality of segments, each segment may be packed using a separate wrapper. The entire cigarette 201, formed by coupling segments, each of which is packed using a separate wrapper, to each other, may be packed using another wrapper.

The tobacco rod 202 may include an aerosol-generating substance. For example, the aerosol-generating substance may include at least one of glycerin, propylene glycol, ethylene glycol, dipropylene glycol, diethylene glycol, triethylene glycol, tetraethylene glycol, or oleyl alcohol, but the present disclosure is not limited thereto. Also, the tobacco rod 202 may include other additives, such as a flavoring agent, a wetting agent, and/or an organic acid. Also, a flavoring liquid, such as menthol or a moisturizer, may be injected into and added to the tobacco rod 202.

The tobacco rod 202 may be manufactured in various forms. For example, the tobacco rod 202 may be formed as a sheet or a strand. For example, the tobacco rod 202 may be formed as shredded tobacco, which is formed by cutting a tobacco sheet into tiny bits. For example, the tobacco rod 202 may be surrounded by a thermally conductive material. For example, the thermally conductive material may be a metal foil such as aluminum foil, but the present disclosure is not limited thereto. In one example, the thermally conductive material surrounding the tobacco rod 202 may uniformly distribute heat transmitted to the tobacco rod 202, thereby improving conduction of the heat applied to the tobacco rod. This may improve the taste of the tobacco. The thermally conductive material surrounding the tobacco rod 202 may function as a susceptor that is heated by the induction heater. Here, although not illustrated in the drawings, the tobacco rod 202 may further include an additional susceptor, in addition to the thermally conductive material surrounding the tobacco rod 202.

The filter rod 203 may be a cellulose acetate filter. The filter rod 203 may be formed in any of various shapes. For example, the filter rod 203 may be a cylinder-type rod. For example, the filter rod 203 may be a hollow tube-type rod. For example, the filter rod 203 may be a recess-type rod. When the filter rod 203 is composed of a plurality of segments, at least one of the plurality of segments may be formed in a different shape.

The filter rod 203 may be formed to generate flavors. In one example, a flavoring liquid may be injected into the filter rod 203. In one example, a separate fiber coated with a flavoring liquid may be inserted into the filter rod 203.

In addition, the filter rod 203 may include at least one capsule 204. Here, the capsule 204 may function to generate a flavor. The capsule 204 may function to generate an aerosol. For example, the capsule 204 may have a structure in which a liquid containing a flavoring material is wrapped with a film. The capsule 204 may have a spherical or cylindrical shape, but the present disclosure is not limited thereto.

When the filter rod 203 includes a segment configured to cool the aerosol, the cooling segment may be made of a polymer material or a biodegradable polymer material. For example, the cooling segment may be made of pure polylactic acid alone, but the present disclosure is not limited thereto. Alternatively, the cooling segment may be formed as a cellulose acetate filter having a plurality of holes formed therein. However, the cooling segment is not limited to the above-described example, and any other type of cooling segment may be used, so long as the same is capable of cooling the aerosol.

Although not illustrated in FIG. 2B, the cigarette 201 according to an embodiment may further include a front-end filter. The front-end filter may be located at the side of the tobacco rod 202 that faces the filter rod 203. The front-end filter may prevent the tobacco rod 202 from becoming detached outwards. The front-end filter may prevent a liquefied aerosol from flowing into the aerosol-generating device 100 from the tobacco rod 202 during inhalation by the user.

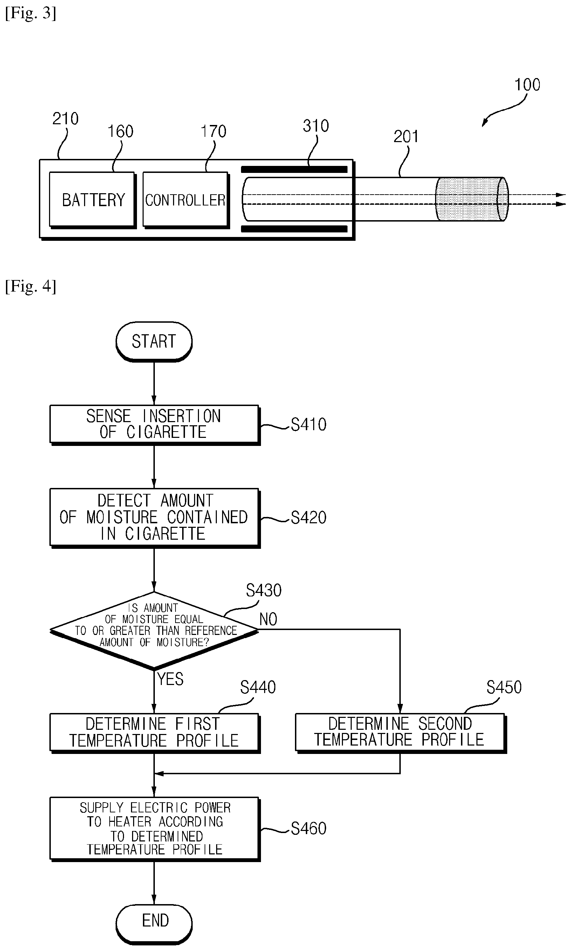

Referring to FIG. 3, the aerosol-generating device 100 according to an embodiment may include an induction heater 310, which heats a thermally conductive material surrounding the tobacco rod 202, which functions as a susceptor. Hereinafter, the aerosol-generating device 100 will be described as including the induction heater 310, but the present disclosure is not limited thereto.

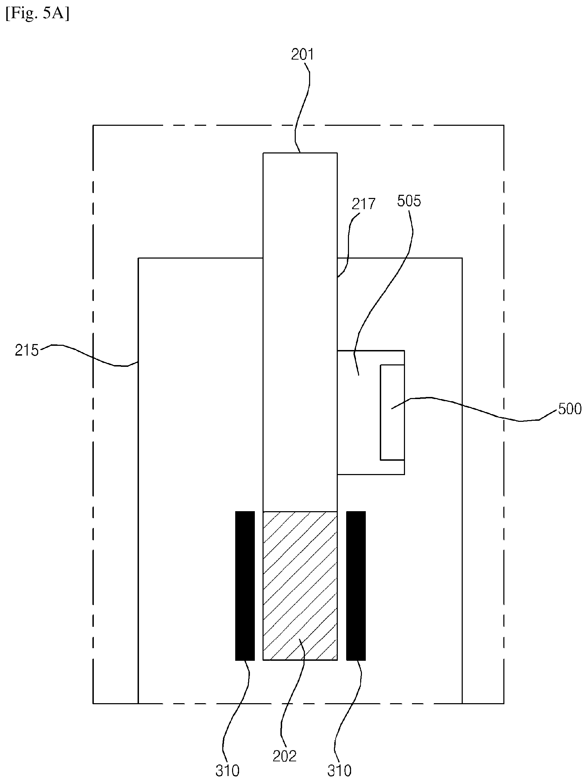

FIG. 4 is a flowchart showing an operation method of the aerosol-generating device according to an embodiment of the present disclosure, and FIGS. 5A to 8 are views for explaining the operation of the aerosol-generating device.

Referring to FIG. 4, the aerosol-generating device 100 may sense insertion of a cigarette 201 using the cigarette detection sensor included in the sensor module 150 in operation S410.

Also, the aerosol-generating device 100 may determine that a cigarette 201 has been inserted thereinto when user input is received through the input device (e.g. a button).

The aerosol-generating device 100 may detect the amount of moisture contained in the cigarette 201 using the moisture detection sensor included in the sensor module 150 in operation S420. The process of detecting the amount of moisture contained in the cigarette 201 will be described with reference to FIGS. 5A to 6B.

Referring to FIG. 5A, the cigarette 201 may be inserted into the inner space surrounded by an inner wall 217 of the housing 215. In this case, the cigarette 201 inserted into the inner space may be disposed such that the outer peripheral surface thereof is in contact with the inner wall 217 of the housing 215.

The heater 310 may be disposed in the housing 215 at a position corresponding to the position at which the thermally conductive material surrounding the tobacco rod 202 is located when the cigarette 201 is inserted into the housing 215.

An accommodation space 505 is formed by being depressed inwards from the inner wall 217 of the housing 215. The accommodation space 505 is formed at a position spaced apart from the heater 310. The length, width, and height of the accommodation space 505 may correspond to the size of the moisture detection sensor 500.

When the cigarette 201 is inserted into the inner space, the accommodation space 505 may not be exposed to external light due to contact between the cigarette 201 and the inner wall 217.

The moisture detection sensor 500 is disposed in the accommodation space 505. The moisture detection sensor 500 is disposed at a position facing the cigarette 201.

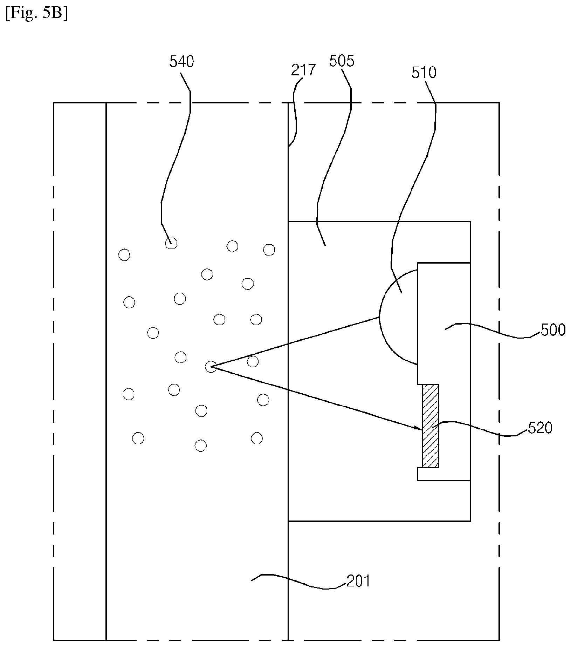

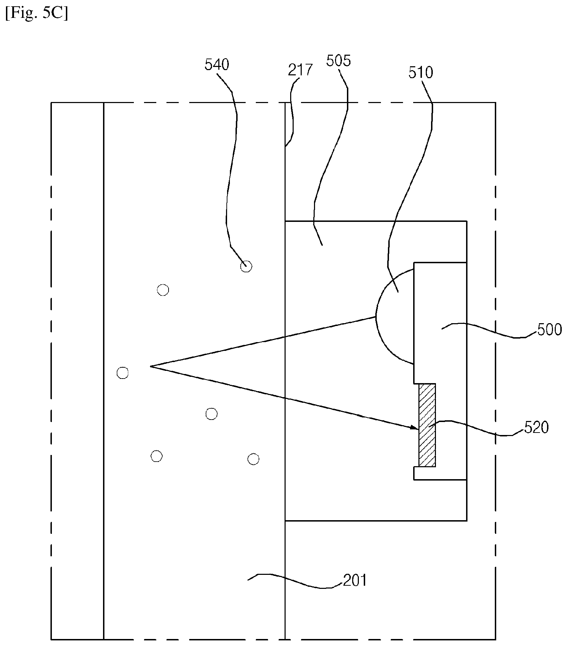

Referring to FIGS. 5B and 5C, the moisture detection sensor 500 may include a light emitter 510 and a light receiver 520.

The light emitter 510 may include at least one light source for generating light. For example, the light emitter 510 may include a light source such as a light-emitting diode (LED), an organic light-emitting diode (OLED), or a laser diode (LD). The light emitter 510 may include a plurality of light sources. In this case, the plurality of light sources may be arranged in a regular pattern.

The light emitter 510 may radiate light in a predetermined direction. For example, the light emitter 510 may include a first light condenser (not shown) for condensing the light generated by the light source toward an object. Here, the first light condenser may be configured as an imaging lens, a diffractive optical element (DOE), or the like.

The light receiver 520 may include a photodiode, which responds to light. The light receiver 520 may output an electric signal corresponding to the light incident on the photodiode.

The light receiver 520 may include a second light condenser (not shown) for condensing the light reflected from the object (hereinafter referred to as "reflected light"). For example, the reflected light condensed by the second light condenser may be transmitted to the photodiode included in the light receiver 520. In this case, the second light condenser may include a lens for receiving the reflected light incident thereon from a predetermined direction.

The light receiver 520 may further include an optical filter (not shown) configured to restrictively transmit light in a specific wavelength range. For example, the optical filter may be an infrared band pass filter, which restrictively transmits an infrared ray having a wavelength of 780 nm to 1 mm.

The light radiated from the light emitter 510 in a preset direction toward the cigarette 201 may be reflected by the cigarette 201. The light reflected by the cigarette 201 may be transmitted to the light receiver 520. In this case, the light receiver 520 may output an electric signal corresponding to the amount of light incident on the photodiode.

At least a portion of the light radiated toward the cigarette 201 may be absorbed by the cigarette 201. For example, at least a portion of the light radiated toward the cigarette 201 may be absorbed by the moisture 540 contained in the cigarette 201 depending on the wavelength of the light.

In this case, the extent to which light is absorbed by the cigarette 201 may differ depending on the amount of moisture 540 contained in the cigarette 201. For example, in the case in which light is radiated toward the cigarette 201, a near-infrared ray having a wavelength of 780 nm to 2.5 µm may be more easily absorbed by the cigarette 201 as the amount of moisture 540 contained in the cigarette 201 is larger.

Also, at least a portion of the light radiated toward the cigarette 201 may not be absorbed by the cigarette 201. At least a portion of the light radiated toward the cigarette 201 may be reflected by the moisture 540. In this case, the time difference between the time point at which light is radiated from the light emitter 510 and the time point at which the reflected light is incident on the light receiver 520 may vary depending on the amount of moisture 540 contained in the cigarette 201.

For example, when a large amount of moisture 540 is contained in the cigarette 201, reflection of light by the moisture 540 may occur more easily than when a small amount of moisture 540 is contained therein. In this case, the time difference between the time point at which light is radiated from the light emitter 510 and the time point at which the reflected light is incident on the light receiver 520 may be shortened.

The moisture detection sensor 500 may output an electric signal corresponding to the amount of light incident on the light receiver 520 and/or the time difference to an external component (e.g. the controller 170). The moisture detection sensor 500 may detect a change in the amount of light incident on the light receiver 520 and/or a change in the time difference. The moisture detection sensor 500 may output an electric signal corresponding to the result of detection to an external component (e.g. the controller 170).

The controller 170 may detect the amount of moisture 540 contained in the cigarette 201 based on the signal received from the moisture detection sensor 500.

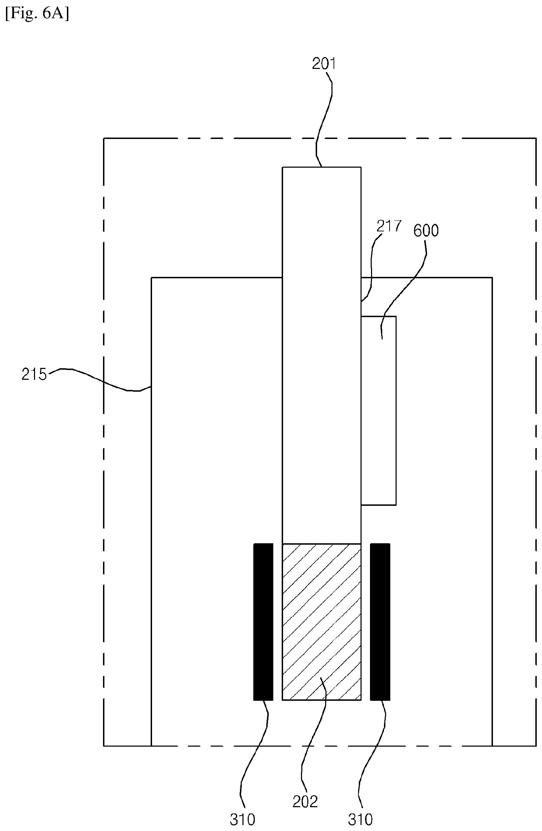

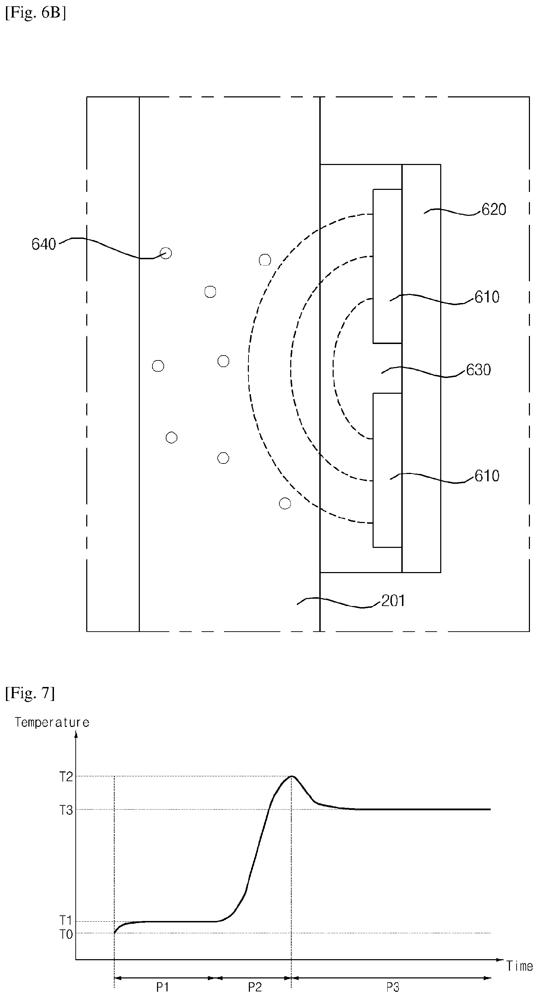

Referring to FIGS. 6A and 6B, the moisture detection sensor 600 may be disposed in the housing 215 so as to contact the cigarette 201 when the cigarette 201 is inserted into the housing 215. In an example, the surface of the moisture detection sensor 600 that is exposed to the inner space, into which the cigarette 201 is inserted, may form a continuous surface with the inner wall 217 of the housing 215. In this case, the moisture detection sensor 600 may be press-fitted into the accommodation space 505.

The moisture detection sensor 600 may be disposed at a position spaced apart from the heater 310.

The moisture detection sensor 600 may include a plurality of electrodes 610, a substrate 620 on which the electrodes 610 are mounted, and/or a contact portion 630 with which the cigarette 201 comes into contact.

The electrodes 610 may be formed of a conductive material. For example, the electrodes 610 may be formed of a metal material having high conductivity, such as gold (Au), silver (Ag), copper (Cu), or aluminum (Al).

The capacitance between the electrodes 610 may vary depending on the amount of moisture 640 contained in the object present between the electrodes 610. For example, as the amount of moisture 640 contained in the cigarette 201 increases, the capacitance may also increase.

The contact portion 630 may be formed of a polymer composite including polydimethylsiloxane (PDMS).

The moisture detection sensor 600 may output an electric signal corresponding to the capacitance between the electrodes 610 to an external component (e.g. the controller 170). The moisture detection sensor 600 may detect a change in the capacitance between the electrodes 610. The moisture detection sensor 600 may output an electric signal corresponding to the result of detection to an external component (e.g. the controller 170).

The controller 170 may detect the amount of moisture 640 contained in the cigarette 201 based on the signal received from the moisture detection sensor 600.

According to various embodiments of the present disclosure, the aerosol-generating device 100 may include a plurality of moisture detection sensors 500 and 600. In an example, the spacing distance between the first moisture detection sensor 500 and the heater 310 may be longer than the spacing distance between the second moisture detection sensor 600 and the heater 310 in consideration of the influence of the heat generated by the heater.

Referring again to FIG. 4, the aerosol-generating device 100 may determine whether the amount of moisture contained in the cigarette 201 is equal to or greater than a predetermined reference amount of moisture in operation S430. Here, the reference amount of moisture may be the minimum amount of moisture at which the user experiences a high temperature due to the moisture contained in the cigarette 201 when inhaling an aerosol.

When the amount of moisture contained in the cigarette 201 is equal to or greater than the reference amount of moisture, the aerosol-generating device 100 may determine a first temperature profile, among the temperature profiles stored in the memory 140, in operation S440.

On the other hand, when the amount of moisture contained in the cigarette 201 is less than the reference amount of moisture, the aerosol-generating device 100 may determine a second temperature profile, which is different from the first temperature profile, among the temperature profiles stored in the memory 140, in operation S450.

The aerosol-generating device 100 may supply electric power to the heater based on the temperature profile determined according to the amount of moisture contained in the cigarette 201 in operation S460.

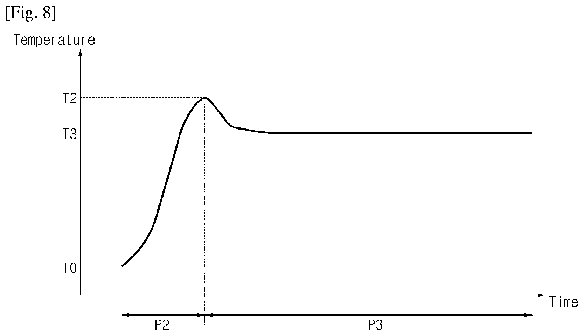

The first and second temperature profiles according to an embodiment of the present disclosure will be described with reference to FIGS. 7 and 8.

Referring to FIG. 7, when electric power is supplied to the heater based on the first temperature profile, a section in which the temperature of the aerosol-generating substance changes may be divided into a first section P1, a second section P2, and a third section P3.

In the first section P1, the aerosol-generating device 100 may supply electric power to the heater so that the aerosol-generating substance is heated to a first temperature T1. For example, the aerosol-generating device 100 may supply electric power to the heater so that the temperature of the aerosol-generating substance is maintained constant at the first temperature T1 during a preset time period.

In this case, the first temperature T1 may be higher than the temperature T0 of external air, and may be lower than the temperature at which the aerosol-generating substance (e.g. glycerin) contained in the cigarette 201 is volatilized. For example, the first temperature T1 may be within the range from 40°C to 80°C. According to the embodiment of the present disclosure, the range within which the first temperature T1 falls may be variously set.

While the temperature of the aerosol-generating substance is maintained constant at the first temperature T1, at least a portion of the moisture contained in the cigarette 201 may evaporate. The first section P1 may be referred to as a "drying section"

In the second section P2, the aerosol-generating device 100 may supply electric power to the heater so that the temperature of the aerosol-generating substance increases to a second temperature T2, which is higher than the first temperature T1. For example, the aerosol-generating device 100 may perform control such that a current pulse having a predetermined frequency and a predetermined duty ratio is supplied to the heater using a pulse width modulation (PWM) method.

In the third section P3, the aerosol-generating device 100 may supply electric power to the heater so that the temperature of the aerosol-generating substance increases to a third temperature T3. For example, the aerosol-generating device 100 may supply electric power to the heater so that the temperature of the aerosol-generating substance is maintained constant at the third temperature T3 using a proportional-integral-differential (PID) method.

In this case, the second temperature T2 and the third temperature T3 may be equal to or higher than the vaporization temperature of the aerosol-generating substance. The second temperature T2 and/or the third temperature T3 may vary depending on the type of aerosol-generating substance included in the cigarette 201.

The second section P2 may be referred to as a "preheating section", and the third section P3 may be referred to as a "temperature maintenance section"

Referring to FIG. 8, when electric power is supplied to the heater based on the second temperature profile, a section in which the temperature of the aerosol-generating substance changes may be divided into a second section P2 and a third section P3.

When the amount of moisture contained in the cigarette 201 is less than the reference amount of moisture, the likelihood of the user experiencing a high temperature due to the moisture contained in the cigarette 210 is low. Accordingly, the drying section for evaporating the moisture contained in the cigarette 201 may be omitted.

Depending on the amount of moisture contained in the cigarette 201, the first temperature T1 in the drying section and/or the time for which the first temperature T1 is maintained may vary. For example, as the amount of moisture contained in the cigarette 201 is larger, the first temperature T1, which is maintained in the drying section, may be set higher. For example, as the amount of moisture contained in the cigarette 201 is larger, the time for which the first temperature T1 is maintained in the drying section may be set longer.

As described above, according to at least one of the embodiments of the present disclosure, it is possible to detect the amount of moisture contained in the cigarette 201 using various sensors.

In addition, according to at least one of the embodiments of the present disclosure, it is possible to appropriately control the amount of electric power supplied to the heater in consideration of the amount of moisture contained in the cigarette 201, thereby preventing the occurrence of a problem in that a user experiences a high temperature when inhaling an aerosol.

Referring to FIGS. 1 to 8, an aerosol-generating device 100 in accordance with one aspect of the present disclosure may include a housing 215 having an inner space formed therein to allow a cigarette 201 to be inserted thereinto, a moisture detection sensor configured to sense moisture contained in the cigarette 201 inserted into the inner space, a memory configured to store therein a plurality of temperature profiles, a heater configured to heat the cigarette 201, and a controller 170. The controller 170 may determine the amount of moisture contained in the cigarette 201 based on a signal received from the moisture detection sensor, and may determine a temperature profile corresponding to the determined amount of moisture, among the plurality of temperature profiles.

In addition, in accordance with another aspect of the present disclosure, the housing 215 may include an accommodation space formed therein so as to be depressed inwards from an inner wall 217 surrounding the cigarette 201, and the moisture detection sensor may be disposed in the accommodation space so as to face the cigarette 201.

In addition, in accordance with another aspect of the present disclosure, the moisture detection sensor 500 may include a light emitter 510 including at least one light source configured to generate and radiate light and a light receiver 520 including at least one photodiode configured to respond to light incident thereon. The controller 170 may determine the amount of moisture contained in the cigarette 201 based on a signal indicating the amount of light incident on the light receiver 520, which is received from the moisture detection sensor 500.

In addition, in accordance with another aspect of the present disclosure, the light receiver 520 may further include an optical filter configured to restrictively transmit light in a specific wavelength range, and the specific wavelength range may correspond to the wavelength range of light radiated from the light emitter 510.

In addition, in accordance with another aspect of the present disclosure, the moisture detection sensor 600 may include a plurality of electrodes 610 and may be disposed so as to contact the cigarette 201. The controller 170 may determine the amount of moisture contained in the cigarette 201 based on a signal indicating a capacitance between the plurality of electrodes 610, which is received from the moisture detection sensor 600.

In addition, in accordance with another aspect of the present disclosure, when the amount of moisture is equal to or greater than a reference amount of moisture, the controller 170 may determine, among the plurality of temperature profiles, a temperature profile including a first section in which the cigarette 201 is heated to a first temperature during a predetermined time period, a second section in which the temperature of the cigarette 201 is increased to a second temperature, which is higher than the first temperature, and a third section in which the cigarette 201 is heated to a third temperature, which is higher than the first temperature and lower than the second temperature, to be the temperature profile corresponding to the determined amount of moisture. When the amount of moisture is less than the reference amount of moisture, the controller 170 may determine, among the plurality of temperature profiles, a temperature profile including a fourth section in which the temperature of the cigarette 201 is increased to a fourth temperature and a fifth section in which the cigarette 201 is heated to a fifth temperature, which is lower than the fourth temperature, to be the temperature profile corresponding to the determined amount of moisture.

In addition, in accordance with another aspect of the present disclosure, the first temperature may be higher than the temperature of external air and lower than the volatilization temperature of an aerosol-generating substance.

In addition, in accordance with another aspect of the present disclosure, the aerosol-generating device may further include a cigarette detection sensor configured to sense insertion of the cigarette 201 into the inner space. The controller 170 may monitor whether the cigarette 201 is inserted into the inner space using the cigarette detection sensor. Upon determining that the cigarette 201 has been inserted into the inner space, the controller 170 may determine the amount of moisture contained in the cigarette 201.

In addition, an operation method of the aerosol-generating device 100 in accordance with one aspect of the present disclosure may include determining the amount of moisture contained in a cigarette 201 inserted into an inner space formed in a housing 215 of the aerosol-generating device 100 using a moisture detection sensor configured to sense moisture contained in the cigarette 201 and determining a temperature profile corresponding to the determined amount of moisture, among a plurality of temperature profiles stored in a memory.

In addition, in accordance with another aspect of the present disclosure, the moisture detection sensor 500 may include a light emitter 510 including at least one light source configured to generate and radiate light and a light receiver 520 including at least one photodiode configured to respond to light incident thereon. The determining the amount of moisture contained in the cigarette 201 may be performed based on the amount of light incident on the light receiver 520.

In addition, in accordance with another aspect of the present disclosure, the moisture detection sensor 600 may include a plurality of electrodes 610 and may be disposed so as to contact the cigarette 201. The determining the amount of moisture contained in the cigarette 201 may be performed based on a capacitance between the plurality of electrodes 610.

In addition, in accordance with another aspect of the present disclosure, the operation method may further include supplying electric power to a heater for heating the cigarette based on the determined temperature profile.

In addition, in accordance with another aspect of the present disclosure, the determining the temperature profile corresponding to the determined amount of moisture may include determining, when the amount of moisture is equal to or greater than a reference amount of moisture, among the plurality of temperature profiles, a temperature profile including a first section in which the cigarette 201 is heated to a first temperature during a predetermined time period, a second section in which the temperature of the cigarette 201 is increased to a second temperature, which is higher than the first temperature, and a third section in which the cigarette 201 is heated to a third temperature, which is higher than the first temperature and lower than the second temperature, to be the temperature profile corresponding to the determined amount of moisture, and determining, when the amount of moisture is less than the reference amount of moisture, among the plurality of temperature profiles, a temperature profile including a fourth section in which the temperature of the cigarette 201 is increased to a fourth temperature and a fifth section in which the cigarette 201 is heated to a fifth temperature, which is lower than the fourth temperature, to be the temperature profile corresponding to the determined amount of moisture.

In addition, in accordance with another aspect of the present disclosure, the operation method may further include monitoring whether the cigarette 201 is inserted into the inner space using a cigarette detection sensor configured to sense insertion of the cigarette 201 into the inner space. The determining the amount of moisture contained in the cigarette 201 may be performed when it is determined that the cigarette 201 has been inserted into the inner space.

Certain embodiments or other embodiments of the disclosure described above are not mutually exclusive or distinct from each other. Any or all elements of the embodiments of the disclosure described above may be combined with another or combined with each other in configuration or function.

For example, a configuration "A" described in one embodiment of the disclosure and the drawings and a configuration "B" described in another embodiment of the disclosure and the drawings may be combined with each other. Namely, although the combination between the configurations is not directly described, the combination is possible except in the case where it is described that the combination is impossible.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An aerosol-generating device (100) comprising:
a housing (215) having an inner space formed therein to allow a cigarette (201) to be inserted thereinto;
a moisture detection sensor (500) configured to sense moisture contained in the cigarette (201) inserted into the inner space;
a memory (140) configured to store a plurality of temperature profiles;
a heater (310) configured to heat the cigarette (201); and
a controller (170) configured to:
determine an amount of moisture contained in the cigarette (201) based on a signal received from the moisture detection sensor (500), and
determine a temperature profile corresponding to the determined amount of moisture among the plurality of temperature profiles,
***characterized in that*** the housing (215) comprises an accommodation space (505) recessed from an inner wall (217) surrounding the cigarette (201),
wherein the accommodation space (505) is formed at a position spaced apart from the heater (310),
and, wherein the moisture detection sensor (500) is disposed in the accommodation space (505) so as to face the cigarette (201).

2. The aerosol-generating device (100) according to claim 1, wherein the moisture detection sensor (500) comprises:
a light emitter (510) comprising at least one light source configured to generate and radiate light; and
a light receiver (520) comprising at least one photodiode configured to respond to light incident thereon,
wherein the signal received from the moisture detection sensor (500) is based on an amount of light incident on the light receiver (520).

3. The aerosol-generating device (100) according to claim 3, wherein the light receiver (520) further comprises an optical filter configured to selectively transmit light in a specific wavelength range, and
wherein the specific wavelength range corresponds to a wavelength range of light radiated from the light emitter (510).

4. The aerosol-generating device (100) according to claim 1, wherein the moisture detection sensor (600) comprises a plurality of electrodes (610) disposed so as to contact the cigarette (201) inserted into the inner space, and
wherein the signal received from the moisture detection sensor (600) is based on a capacitance between the plurality of electrodes (610).

5. The aerosol-generating device (100) according to claim 1, wherein the controller (170) is configured to:
based on the amount of moisture being greater than or equal to a reference amount of moisture, the determined temperature profile comprises:
a first section (P1) in which the cigarette (201) is heated to a first temperature (T1) during a predetermined time period;
a second section (P2) in which the cigarette (201) is heated to a second temperature (T2) higher than the first temperature (T1); and
a third section (P3) in which the cigarette (201) is heated to a third temperature (T3) higher than the first temperature (T1) and lower than the second temperature (T2); and
based on the amount of moisture being less than the reference amount of moisture, the determined temperature profile comprises:
a fourth section in which the cigarette (201) is heated to a fourth temperature; and
a fifth section in which the cigarette (201) is heated to a fifth temperature lower than the fourth temperature.

6. The aerosol-generating device (100) according to claim 5, wherein the first temperature (T1) is higher than a temperature of external air and lower than a volatilization temperature of an aerosol-generating substance.

7. The aerosol-generating device (100) according to claim 1, further comprising:
a cigarette detection sensor configured to sense insertion of the cigarette (201) into the inner space,
wherein the controller (170) is configured to determine the amount of moisture contained in the cigarette (201) in response to insertion of the cigarette (201) sensed via the cigarette detection sensor.

8. An operation method of an aerosol-generating device (100), the method comprising:
determining an amount of moisture contained in a cigarette (201) inserted into an inner space formed in a housing (215) of the aerosol-generating device (100) using a moisture detection sensor (500) configured to sense moisture contained in the cigarette (201); and
determining a temperature profile corresponding to the determined amount of moisture among a plurality of temperature profiles stored in a memory (140),
wherein the housing (215) comprises an accommodation space (505) recessed from an inner wall surrounding the cigarette (201),
***characterized in that*** the accommodation space (505) is formed at a position spaced apart from a heater (310) configured to heat the cigarette (201),
and, wherein the moisture detection sensor (500) is disposed in the accommodation space (505) so as to face the cigarette (201).

9. The method according to claim 8, wherein the moisture detection sensor (500) comprises:
a light emitter (510) comprising at least one light source configured to generate and radiate light; and
a light receiver (520) comprising at least one photodiode configured to respond to light incident thereon, and
wherein the determining the amount of moisture contained in the cigarette (201) is performed based on an amount of light incident on the light receiver (520).

10. The method according to claim 8, wherein the moisture detection sensor (600) comprises a plurality of electrodes (610) disposed so as to contact the cigarette (201), and wherein the determining the amount of moisture contained in the cigarette (201) is performed based on a capacitance between the plurality of electrodes (610).

11. The method according to claim 8, wherein the determining the temperature profile corresponding to the determined amount of moisture comprises:
based on the amount of moisture being greater than or equal to a reference amount of moisture, the determined temperature profile comprises:
a first section (P1) in which the cigarette (201) is heated to a first temperature (T1) during a predetermined time period;
a second section (P2) in which the cigarette (201) is heated to a second temperature (T2) higher than the first temperature (T1); and
a third section (P3) in which the cigarette (201) is heated to a third temperature (T3) higher than the first temperature (T1) and lower than the second temperature (T2); and
based on the amount of moisture being less than the reference amount of moisture, the determined temperature profile comprises:
a fourth section in which the temperature of the cigarette (201) is heated to a fourth temperature; and
a fifth section in which the cigarette (201) is heated to a fifth temperature lower than the fourth temperature.

12. The method according to claim 11, wherein the first temperature (T1) is higher than a temperature of external air and lower than a volatilization temperature of an aerosol-generating substance.

13. The method according to claim 8,
wherein the determining the amount of moisture contained in the cigarette (201) is performed in response to sensing insertion of the cigarette (201) via a cigarette detection sensor configured to sense insertion of the cigarette (201) into the inner space.

## Patentansprüche

1. Aerosol erzeugende Vorrichtung (100), die Folgendes umfasst:
ein Gehäuse (215), das einen darin ausgebildeten Innenraum aufweist, um zu ermöglichen, dass eine Zigarette (201) darin eingesteckt werden kann;
einen Feuchtigkeitsdetektionssensor (500), der dazu konfiguriert ist, Feuchtigkeit zu erfassen, die in der in den Innenraum eingesteckten Zigarette (201) enthalten ist;
einen Speicher (140), der dazu konfiguriert ist, eine Vielzahl von Temperaturprofilen zu speichern;
ein Heizelement (310), das dazu konfiguriert ist, die Zigarette (201) zu erhitzen; und
eine Steuerung (170), die für Folgendes konfiguriert ist:
Bestimmen eines Betrags an in der Zigarette (201) enthaltener Feuchtigkeit basierend auf einem vom Feuchtigkeitsdetektionssensor (500) empfangenen Signal, und
Bestimmen eines Temperaturprofils, das dem bestimmten Betrag an Feuchtigkeit entspricht, aus der Vielzahl von Temperaturprofilen,
**dadurch gekennzeichnet, dass**
das Gehäuse (215) einen Aufnahmeraum (505) umfasst, der von einer die
Zigarette (201) umgebenden Innenwand (217) zurückversetzt ist, wobei der Aufnahmeraum (505) an einer Position ausgebildet ist, die von dem
Heizelement (310) beabstandet ist,
und wobei der Feuchtigkeitsdetektionssensor (500) in dem Aufnahmeraum (505) so angeordnet ist, dass er der Zigarette (201) zugewandt ist.

2. Aerosol erzeugende Vorrichtung (100) nach Anspruch 1, wobei der
Feuchtigkeitsdetektionssensor (500) Folgendes umfasst:
einen Lichtemitter (510), der mindestens eine Lichtquelle umfasst, die dazu konfiguriert ist, Licht zu erzeugen und auszustrahlen; und
einen Lichtempfänger (520), der mindestens eine Photodiode umfasst, die dazu konfiguriert ist, auf darauf einfallendes Licht zu reagieren,
wobei das vom Feuchtigkeitsdetektionssensor (500) empfangene Signal auf einem Betrag an auf den Lichtempfänger (520) einfallendem Licht basiert.

3. Aerosol erzeugende Vorrichtung (100) nach Anspruch 3, wobei der Lichtempfänger (520) ferner einen optischen Filter umfasst, der dazu konfiguriert ist, Licht in einem spezifischen Wellenlängenbereich selektiv zu übertragen, und
wobei der spezifische Wellenlängenbereich einem Wellenlängenbereich von vom Lichtemitter (510) ausgestrahltem Licht entspricht.

4. Aerosol erzeugende Vorrichtung (100) nach Anspruch 1, wobei der Feuchtigkeitsdetektionssensor (600) eine Vielzahl von Elektroden (610) umfasst, die so angeordnet sind, dass sie die in den Innenraum eingesteckte Zigarette (201) berühren, und
wobei das vom Feuchtigkeitsdetektionssensor (600) empfangene Signal auf einer Kapazität zwischen der Vielzahl von Elektroden (610) basiert.

5. Aerosol erzeugende Vorrichtung (100) nach Anspruch 1, wobei die Steuerung (170) für Folgendes konfiguriert ist:
basierend auf dem Betrag an Feuchtigkeit, der größer oder gleich einem Referenzbetrag an Feuchtigkeit ist, umfasst das bestimmte Temperaturprofil Folgendes:
einen ersten Bereich (P1), in dem die Zigarette (201) während einer vorbestimmten Zeitdauer auf eine erste Temperatur (T1) erhitzt wird;
einen zweiten Bereich (P2), in dem die Zigarette (201) auf eine zweite Temperatur (T2), die höher als die erste Temperatur (T1) ist, erhitzt wird; und
einen dritten Bereich (P3), in dem die Zigarette (201) auf eine dritte Temperatur (T3), die höher als die erste Temperatur (T1) und niedriger als die zweite Temperatur (T2) ist, erhitzt wird; und
basierend auf dem Betrag an Feuchtigkeit, der kleiner als der Referenzbetrag an Feuchtigkeit ist, umfasst das bestimmte Temperaturprofil Folgendes:
einen vierten Bereich, in dem die Zigarette (201) auf eine vierte Temperatur erhitzt wird; und
einen fünften Bereich, in dem die Zigarette (201) auf eine fünfte Temperatur, die niedriger als die vierte Temperatur ist, erhitzt wird.

6. Aerosol erzeugende Vorrichtung (100) nach Anspruch 5, wobei die erste Temperatur (T1) höher als eine Temperatur der Außenluft und niedriger als eine Verdampfungstemperatur einer Aerosol erzeugenden Substanz ist.

7. Aerosol erzeugende Vorrichtung (100) nach Anspruch 1, die ferner Folgendes umfasst:
einen Zigarettendetektionssensor, der dazu konfiguriert ist, das Einstecken der Zigarette (201) in den Innenraum zu erfassen,
wobei die Steuerung (170) dazu konfiguriert ist, den Betrag an in der Zigarette (201) enthaltener Feuchtigkeit als Reaktion auf das Einstecken der Zigarette (201), das mittels des Zigarettendetektionssensors erfasst wird, zu bestimmen.

8. Betriebsverfahren einer Aerosol erzeugenden Vorrichtung (100), wobei das Verfahren Folgendes umfasst:
Bestimmen eines Betrags an Feuchtigkeit, die in einer Zigarette (201) enthalten ist, die in einen in einem Gehäuse (215) der Aerosol erzeugenden Vorrichtung (100) ausgebildeten Innenraum eingesteckt ist, unter Verwendung eines Feuchtigkeitsdetektionssensors (500), der dazu konfiguriert ist, die in der Zigarette (201) enthaltene Feuchtigkeit zu erfassen; und
Bestimmen eines Temperaturprofils, das dem bestimmten Betrag an Feuchtigkeit entspricht, unter einer Vielzahl von in einem Speicher (140) gespeicherten Temperaturprofilen,
wobei das Gehäuse (215) einen Aufnahmeraum (505) umfasst, der von einer die Zigarette (201) umgebenden Innenwand zurückversetzt ist,
**dadurch gekennzeichnet, dass**
der Aufnahmeraum (505) an einer Position ausgebildet ist, die von einem Heizelement (310) beabstandet ist, das dazu konfiguriert ist, die Zigarette (201) zu erhitzen,
und wobei der Feuchtigkeitsdetektionssensor (500) so in dem Aufnahmeraum (505) angeordnet ist, dass er der Zigarette (201) zugewandt ist.

9. Verfahren nach Anspruch 8, wobei der Feuchtigkeitsdetektionssensor (500) Folgendes umfasst:
einen Lichtemitter (510), der mindestens eine Lichtquelle umfasst, die dazu konfiguriert ist, Licht zu erzeugen und auszustrahlen; und
einen Lichtempfänger (520), der mindestens eine Photodiode umfasst, die dazu konfiguriert ist, auf darauf einfallendes Licht zu reagieren, und
wobei das Bestimmen des Betrags an in der Zigarette (201) enthaltener Feuchtigkeit basierend auf einem Betrag an auf den Lichtempfänger (520) einfallendem Licht durchgeführt wird.

10. Verfahren nach Anspruch 8, wobei der Feuchtigkeitsdetektionssensor (600) eine Vielzahl von Elektroden (610) umfasst, die so angeordnet sind, dass sie die Zigarette (201) berühren, und
wobei das Bestimmen des Betrags an in der Zigarette (201) enthaltener Feuchtigkeit basierend auf einer Kapazität zwischen der Vielzahl von Elektroden (610) durchgeführt wird.

11. Verfahren nach Anspruch 8, wobei das Bestimmen des Temperaturprofils, das dem bestimmten Betrag an Feuchtigkeit entspricht, Folgendes umfasst:
basierend auf dem Betrag an Feuchtigkeit, der größer oder gleich einem Referenzbetrag an Feuchtigkeit ist, umfasst das bestimmte Temperaturprofil Folgendes:
einen ersten Bereich (P1), in dem die Zigarette (201) während einer vorbestimmten Zeitdauer auf eine erste Temperatur (T1) erhitzt wird;
einen zweiten Bereich (P2), in dem die Zigarette (201) auf eine zweite Temperatur (T2), die höher als die erste Temperatur (T1) ist, erhitzt wird; und
einen dritten Bereich (P3), in dem die Zigarette (201) auf eine dritte Temperatur (T3), die höher als die erste Temperatur (T1) und niedriger als die zweite Temperatur (T2) ist, erhitzt wird; und
basierend auf dem Betrag an Feuchtigkeit, der kleiner als der Referenzbetrag an Feuchtigkeit ist, umfasst das bestimmte Temperaturprofil Folgendes:
einen vierten Bereich, in dem die Zigarette (201) auf eine vierte Temperatur erhitzt wird; und
einen fünften Bereich, in dem die Zigarette (201) auf eine fünfte Temperatur, die niedriger als die vierte Temperatur ist, erhitzt wird.

12. Verfahren nach Anspruch 11, wobei die erste Temperatur (T1) höher als eine Temperatur der Außenluft und niedriger als eine Verdampfungstemperatur einer Aerosol erzeugenden Substanz ist.

13. Verfahren nach Anspruch 8, wobei das Bestimmen des Betrags an in der Zigarette (201) enthaltener Feuchtigkeit als Reaktion auf das Erfassen des Einsteckens der Zigarette (201) über einen Zigarettendetektionssensor durchgeführt wird, der dazu konfiguriert ist, das Einstecken der Zigarette (201) in den Innenraum zu erfassen.

## Revendications

1. Dispositif de génération d'aérosol (100) comprenant :
un boîtier (215) comportant un espace intérieur formé dans celui-ci pour permettre à une cigarette (201) d'être insérée dans celui-ci ;
un capteur de détection d'humidité (500) configuré pour détecter l'humidité contenue dans la cigarette (201) insérée dans l'espace intérieur ;
une mémoire (140) configurée pour stocker une pluralité de profils de température ;
un élément chauffant (310) configuré pour chauffer la cigarette (201) ; et
un élément de commande (170) configuré pour :
déterminer une quantité d'humidité contenue dans la cigarette (201) sur la base d'un signal reçu à partir du capteur de détection d'humidité (500), et
déterminer un profil de température correspondant à la quantité d'humidité déterminée parmi la pluralité de profils de température,
**caractérisé en ce que**
le boîtier (215) comprend un espace de réception (505) en retrait par rapport à une paroi intérieure (217) entourant la cigarette (201),
dans lequel l'espace de réception (505) est formé à une position espacée de l'élément chauffant (310),
et, dans lequel le capteur de détection d'humidité (500) est disposé dans l'espace de réception (505) de manière à faire face à la cigarette (201).

2. Dispositif de génération d'aérosol (100) selon la revendication 1, dans lequel le capteur de détection d'humidité (500) comprend :
un émetteur de lumière (510) comprenant au moins une source de lumière configurée pour générer et irradier de la lumière ; et
un récepteur de lumière (520) comprenant au moins une photodiode configurée pour réagir à la lumière incidente sur celle-ci,
dans lequel le signal reçu à partir du capteur de détection d'humidité (500) est basé sur une quantité de lumière incidente sur le récepteur de lumière (520).

3. Dispositif de génération d'aérosol (100) selon la revendication 3, dans lequel le récepteur de lumière (520) comprend en outre un filtre optique configuré pour transmettre sélectivement de la lumière dans une plage de longueur d'onde spécifique, et
dans lequel la plage de longueur d'onde spécifique correspond à une plage de longueur d'onde de lumière irradiée à partir de l'émetteur de lumière (510).

4. Dispositif de génération d'aérosol (100) selon la revendication 1, dans lequel le capteur de détection d'humidité (600) comprend une pluralité d'électrodes (610) disposées de manière à être en contact avec la cigarette (201) insérée dans l'espace intérieur, et
dans lequel le signal reçu à partir du capteur de détection d'humidité (600) est basé sur une capacitance entre la pluralité d'électrodes (610).

5. Dispositif de génération d'aérosol (100) selon la revendication 1, dans lequel l'élément de commande (170) est configuré pour :
sur la base du fait que la quantité d'humidité est supérieure ou égale à une quantité d'humidité de référence, le profil de température déterminé comprend :
une première section (P1) dans laquelle la cigarette (201) est chauffée à une première température (T1) pendant une durée prédéterminée ;
une deuxième section (P2) dans laquelle la cigarette (201) est chauffée à une deuxième température (T2) supérieure à la première température (T1) ;
une troisième section (P3) dans laquelle la cigarette (201) est chauffée à une troisième température (T3) supérieure à la première température (T1) et inférieure à la deuxième température (T2) ; et
sur la base du fait que la quantité d'humidité est inférieure à la quantité d'humidité de référence, le profil de température déterminé comprend :
une quatrième section dans laquelle la cigarette (201) est chauffée à une quatrième température ; et
une cinquième section dans laquelle la cigarette (201) est chauffée à une cinquième température inférieure à la quatrième température.

6. Dispositif de génération d'aérosol (100) selon la revendication 5, dans lequel la première température (T1) est supérieure à une température de l'air extérieur et inférieure à une température de volatilisation d'une substance de génération d'aérosol.

7. Dispositif de génération d'aérosol (100) selon la revendication 1, comprenant en outre :
un capteur de détection de cigarette configuré pour détecter l'insertion de la cigarette (201) dans l'espace intérieur,
dans lequel l'élément de commande (170) est configuré pour déterminer la quantité d'humidité contenue dans la cigarette (201) en réponse à l'insertion de la cigarette (201) détectée par le capteur de détection d'humidité.

8. Procédé de fonctionnement d'un dispositif de génération d'aérosol (100), le procédé comprenant :
la détermination d'une quantité d'humidité contenue dans une cigarette (201) insérée dans un espace intérieur formé dans un boîtier (215) du dispositif de génération d'aérosol (100) à l'aide d'un capteur de détection d'humidité (500) configuré pour détecter l'humidité contenue dans la cigarette (201) ; et
la détermination d'un profil de température correspondant à la quantité d'humidité déterminée parmi une pluralité de profils de température stockés dans une mémoire (140),
dans lequel le boîtier (215) comprend un espace de réception (505) en retrait par rapport à une paroi intérieure entourant la cigarette (201),
**caractérisé en ce que**
l'espace de réception (505) est formé à une position espacée d'un élément chauffant (310) configuré pour chauffer la cigarette (201),
et, dans lequel le capteur de détection d'humidité (500) est disposé dans l'espace de réception (505) de manière à faire face à la cigarette (201).

9. Procédé selon la revendication 8, dans lequel le capteur de détection d'humidité (500) comprend :
un émetteur de lumière (510) comprenant au moins une source de lumière configurée pour générer et irradier de la lumière ; et
un récepteur de lumière (520) comprenant au moins une photodiode configurée pour réagir à la lumière incidente sur celle-ci, et
dans lequel la détermination de la quantité d'humidité contenue dans la cigarette (201) est effectuée sur la base d'une quantité de lumière incidente sur le récepteur de lumière (520).

10. Procédé selon la revendication 8, dans lequel le capteur de détection d'humidité (600) comprend une pluralité d'électrodes (610) disposées de manière à être en contact avec la cigarette (201), et
dans lequel la détermination de la quantité d'humidité contenue dans la cigarette (201) est effectuée sur la base d'une capacitance entre la pluralité d'électrodes (610).

11. Procédé selon la revendication 8, dans lequel la détermination du profil de température correspondant à la quantité d'humidité déterminée comprend :
sur la base du fait que la quantité d'humidité est supérieure ou égale à une quantité d'humidité de référence, le profil de température déterminé comprend :
une première section (P1) dans laquelle la cigarette (201) est chauffée à une première température (T1) pendant une durée prédéterminée ;
une deuxième section (P2) dans laquelle la cigarette (201) est chauffée à une deuxième température (T2) supérieure à la première température (T1) ; et
une troisième section (P3) dans laquelle la cigarette (201) est chauffée à une troisième température (T3) supérieure à la première température (T1) et inférieure à la deuxième température (T2) ; et
sur la base du fait que la quantité d'humidité est inférieure à la quantité d'humidité de référence, le profil de température déterminé comprend :
une quatrième section dans laquelle la cigarette (201) est chauffée à une quatrième température ; et
une cinquième section dans laquelle la cigarette (201) est chauffée à une cinquième température inférieure à la quatrième température.

12. Procédé selon la revendication 11, dans lequel la première température (T1) est supérieure à une température de l'air extérieur et inférieure à une température de volatilisation d'une substance de génération d'aérosol.

13. Procédé selon la revendication 8,
dans lequel la détermination de la quantité d'humidité contenue dans la cigarette (201) est effectuée en réponse à la détection de l'insertion de la cigarette (201) par le capteur de détection d'humidité configuré pour détecter l'insertion de la cigarette (201) dans l'espace intérieur.
